# EUROPEAN PATENT APPLICATION

(11) **EP 1 462 958 A2**
(43) Date of publication of application: **29.09.2004**
(21) Application number: 04006585.6
(22) Date of filing: 18.03.2004
(51) Int. Cl.: G06F 17/30

(54) **Systems and methods for requesting and receiving database change notifications**

(30) Priority: 28.03.2003 US 402025
(71) Applicant: MICROSOFT CORPORATION, Redmond, WA 98052 (US)
(72) Inventor: Pizzo, Michael J., Bellevue Washington 98008 (US); Sundaresan, Sharad, Sammamish Washington 98074 (US); Pamulapati, Ramakrishna P., Redmond WA 98053-1951 (US); Kleinerman, Christian, Bellevue Washington 98007 (US); Castro, Pablo, Bellevue Washington 98007 (US)
(74) Representative: Grünecker, Kinkeldey, Stockmair & Schwanhäusser Anwaltssozietät

(57) **Abstract**

The present invention relates to systems and methods for providing a notification when subsequent query results from a registered database query change due to a database change. The systems and methods employ a service broker to tacilitate storing database query registration information associated with a registered database query in a queue(s) and activating a notification delivery service(s). During an activation period, the notification delivery service(s) can access the queue(s) to obtain the database query registration information. Then the notification delivery service(s) can construct and transmit a change message(s). The change message(s) can he employed to facilitate notifying a component(s) registered to receive notification when the query results change and/or invalidate saved query results. The present invention can be employed with various database registration, database change detection, and database change message reception mechanisms. Furthermore, the present invention can be employed in a client-server environment such as an SQL based environment.

## Description

### TECHNICAL FIELD

The present invention relates generally to databases, and more particularly to systems and methods to register a database query in order to receive a database change notification and to deliver a database change message that indicates the results of the registered database query changed.

### BACKGROUND OF THE INVENTION

Computing and networking technologies have transformed many important aspects of everyday life. Computers have become a household staple instead of a luxury, educational tool and/or entertainment center, and provide users with a tool to manage and forecast finances, control household operations like heating, cooling, lighting and security, and store records and images in a permanent and reliable medium. Networking technologies like the internet provide users with virtually unlimited access to remote systems, information and associated applications.

Traditional business practices are evolving with computing and networking technologies. For example, a conventional banking transaction can include gathering information such as bank account number, passbook and identification, dedicating time to travel to the bank, procuring transportation, waiting in line and utilizing a teller to facilitate a banking transaction. Today, a consumer can access his/her account *via* the Internet and perform a growing number of available transactions such as balance inquiries, funds transfers and bill payment with the click of a mouse button.

As computing and networking technologies become robust, secure and reliable, more consumers, wholesalers, retailers, entrepreneurs, educational institutions, advocacy groups and the like are shifting paradigms and employing the Internet to perform business instead of the traditional means. For example, many businesses and consumers are providing web sites and/or on-line services (e.g., for purchasing food and clothing, searching for information, sending email and playing interactive games). In another example, a stock market web site can provide the user with tools for retrieving stock quotes and purchasing stock.

Typically, a user interfaces with a client(s) application (*e.g.*, a web page) to interact with a server(s) that stores information in a database that is accessible to the client application. Databases provide a persistent, durable store for data that can be shared across multiple users and applications. Client(s) applications generally retrieve data from the database through a query(s), which returns results containing the subset of data interesting to the application. The application then consumes, displays, transforms, stores, or acts on those results, and may submit changes based on the results retrieved.

Once results are retrieved changes may be made to the data in the database that render previously retrieved results inconsistent with the state in the database. Such changes are generally not apparent to the client holding the previously retrieved results unless the client resubmits a request to the database.

### SUMMARY OF THE INVENTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

The present invention rotates to systems and methods for registering a database query in order to receive a notification when a database change occurs that would render the results of the query at the time of registration inconsistent with the current state of the database.

Conventionally, a user request can initiate database query to retrieve data from a database that fulfills the request. In many instances, the database can become a common source of resource contention. For example, more than one user can transmit a request that concurrently queries the database for similar results. The database then represents a state that is shared amongst the users. Shared state contention can limit the scalability of a system and/or architecture. In other instances, the user can perform frequent and similar requests on the database. For example, a user can perform repetitive mouse clicks to initiate a similar request on the database in order to periodically refresh the data displayed by an application and/or a web page, and/or an application may periodically issue a query against a database to determine if the state of the database has changed. Repetitive database queries can be time intensive, reduce bandwidth, diminish performance, and consume resources, for example.

A conventional technique employed to reduce the number of queries (*e.g.*, *via* one or more users) comprises saving frequently utilized data external the database. A user(s) can then utilize the saved data instead of performing a repetitive query. However, the consistency and accuracy of the saved data is compromised because a subsequent database change can occur to render the saved data inconsistent with the current data (in the changed database) unbeknownst to the user(s).

According to one aspect, the systems and methods of the present invention mitigate database load (*e.g.*, mitigate queries), increase scalability and ensure data consistency. For example, one or more users can submit a database query and register the database query in order to receive a notification when a database change alters (or would alter) the results of the registered database query.

In practice, the results of a query can be saved external to the database (*e.g.,* in cache and on a web server) and utilized by the user(s), wherein the user(s) can employ the saved results more than once instead of performing an additional query that would return similar results. When a database change occurs that would render the results of a subsequent query inconsistent with the saved results, a notification indicating that the saved results have become inconsistent can be transmitted to the user(s). The user(s) can then utilize the notification to invalidate the saved data, perform a query to refresh the saved data, and/or ignore the notification, for example.

The invention includes systems and methods to register a database query, maintain query registration information, detect database changes that affect the registered database query, provide a message indicating a registered database query has been affected. For example, registering to receive a database change notification generally comprises assembling and providing database query registration information to a server. When a database change occurs that renders the database state inconsistent with the previous results, the associated database query registration information becomes accessible to a message delivery service. The delivery service utilizes the database query registration information to construct and transmit a change message. The change message is employed to facilitate routing a change notification to components associated with the results of the registered query in order to notify the components that previous results have become invalid.

The systems and methods can be employed in various environments including a client-server environment (e.g., SQL based) and a web environment. Thus, the present invention provides a means to monitor a database query for changes and to be notified when the results of the registered query change. The foregoing can be advantageous when a user(s) is utilizing saved data retrieved from a database and desires to be notified when the saved data becomes inconsistent, when data being displayed to a user needs to be refreshed, and/or when action is to be taken based on the changed results. In addition. the subject invention can be employed with existing architectures to leverage security, reliability and scalability, and provide a familiar programming environment.

To the accomplishment of the foregoing and related ends, the invention comprises the features hereinafter fully described and particularly pointed out in the claims. The following description and the annexed drawings set forth in detail certain illustrative aspects and implementations of the invention. These are indicative, however, of but a few of the various ways in which the principles of the invention may be employed. Other objects, advantages and novel features of the invention will become apparent from the following detailed description of the invention when considered in conjunction with the drawings.

### BRIEF DESCRIPTION OF THE DRAWINGS

Fig. 1 illustrates an exemplary database change message delivery system in accordance with one aspect of the present invention.
Fig. 2 illustrates an exemplary server in accordance with one aspect of the present invention.
Fig. 3 illustrates an exemplary data invalidation system in accordance with one aspect of the present invention.
Fig. 4 illustrates an exemplary registration system in accordance with one aspect of the present invention.
Fig. 5 illustrates an exemplary notification system in accordance with one aspect of the present invention.
Fig. 6 illustrates an exemplary client-server system in accordance with one aspect of the present invention.
Fig. 7 illustrates another exemplary client-server system in accordance with one aspect of the present Mention.
Fig. 8 illustrates exemplary security techniques in accordance with one aspect of the present invention.
Fig. 9 illustrates an exemplary client-server system in accordance with one aspect of the present invention.
Fig. 10 illustrates a registration and delivery methodology in accordance with one aspect of the present invention.
Fig. 11 illustrates a first registration, delivery and notification methodology in accordance with one aspect of the present invention.
Fig. 12 is a continuation of Fig. 10, in accordance with one aspect of the present invention.
Fig. 13 illustrates an exemplary operating system in accordance with one aspect of the present invention.

### DETAILED DESCRIPTION OF THE INVENTION

The present invention is now described with reference to the drawings, wherein like reference numerals are used to refer to like elements throughout. In the following description, for purposes of explanation, numerous specific details are set forth in order to provide a thorough understanding of the present invention. It may be evident, however, that the present invention may be practiced without these specific details. In other instances, well-known structures and devices are shown in block diagram form in order to facilitate describing the present invention.

As used in this application, the term "component" is intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a computer component. One or more components may reside within a process and/or thread of execution and a component may be localized on one computer and/or distributed between two or more computers. A "thread" is the entity within a process that the operating sy stem kernel schedules for execution. As is well known in the art, each thread has an associated "cuntext" which is the volatile data associated with the execution of the thread. A thread's context includes the contents of system registers and the virtual address belonging to the thread's process. Thus, the actual data comprising a thread's context varies as it executes.

The subject invention relates to systems and methods for providing a notification when a database change would affect the results of a registered database query. The systems and methods typically employ a service broker to facilitate conveyance of database query registration information and transmission of a database change message, a queue to store database query registration information from the service broker, and a notification delivery service to transmit a database change message. The sy stems and methods optionally employ various mechanisms for receiving registration requests. assembling registration messages, transmitting registration messages, detecting database changes, receiving database change messages and providing database change notifications.

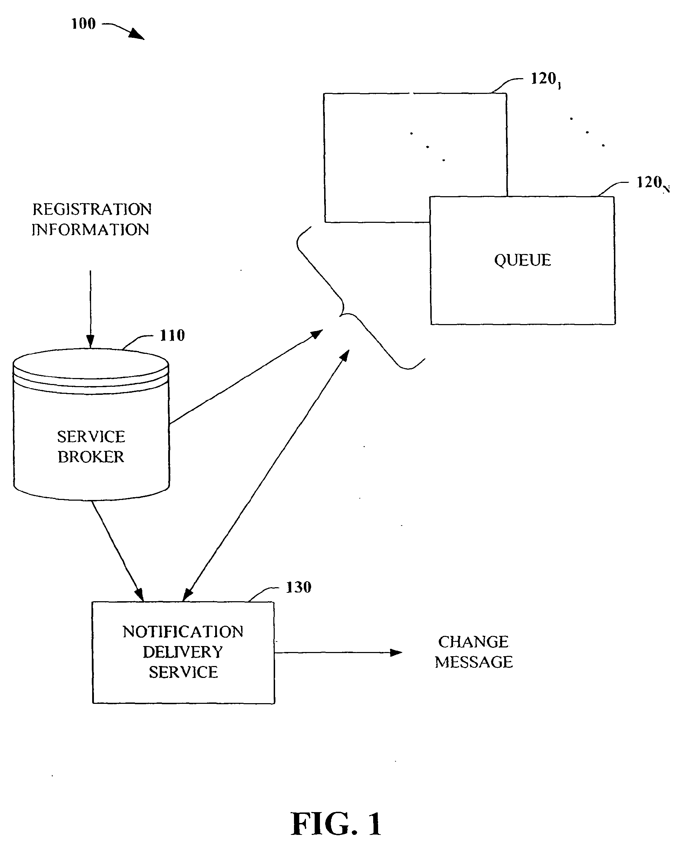

Referring to Fig. 1, an exemplary database change message delivery system 100 (hereafter system 100) in accordance with an aspect of the present invention is illustrated. The system 100 comprises a service broker 110 to facilitate transferring database query registration information, a first queue 120₁ through an Nth queue 120_{N}, N being an integer greater than or equal to one, to store the database query registration information provided to the service broker 110, and a notification delivery service 130 to transmit change messages based at least in part on the database query registration information. The first queue 120₁ through the Nth queue 120_{N} can be referred to collectively as the queues 120.

Generally, a component (*e.g.*, a client, a user and an application) can register (*e.g.*, subscribe) a database query with a system employing system 100. Query registration typically includes providing database query registration information in conjunction with and/or separate from a request for query results. Database query registration information can include a unique identifier, a delivery address, a queue name, a time-out period, and various communication and security options, for example. Query registration can be employed in order to receive a change message (*e.g.,* an invalidation message) when subsequent execution of the registered query would return different results. For example, after registering the query, a database change that would alter the results returned by the query would invoke a change message. Examples of typical database changes that would invoke a change message include inserts, updates and deletions, as well as schema changes. It is to be appreciated that an expiration period (*e.g.*, a time-out period like the time-out period included in the registration information) and/or other criteria can additionally be employed. For example, registration of the database query can include providing an expiration period such that after "X" seconds from registration, a change message will be invoked.

When a database change occurs wherein a subsequent request utilizing the registered query would return different results, the database query registration information is provided to the service broker 110. Additionally, other information, for example information describing the cause of the notification, can be serially and/or concurrently provided to the service broker 110. The service broker 110, serially and/or concurrently, provides at least a portion of the database query registration information to one of the queues 120, and the service broker 110 and/or the queues 120 invoke the notification delivery service 130. Invocation of the notification delivery service 130 includes activating the notification delivery service 130, if it is not already active. An activated notification delivery service 130 can access the queues 120 and utilize the database query registration information stored therein to construct and transmit a change message to the component that registered the database query. As noted above, the change message typically indicates that a subsequent query would return inconsistent results.

It is to be appreciated that one or more components can register one or more database queries, and the one or more database queries can return similar results, as described below. Furthermore, it is to be appreciated that any of the queues 120 can store database query registration information for one or more components and/or one or more queries. The foregoing affords for homogenous storage amongst the queues 120. For example, in one aspect of the present invention database query registration information for queries that return similar results can be stored in a similar queue. Thus, database query registration information for components registered to receive a change message associated with a query(s) that returns similar results can be grouped by queue. In another aspect of the present invention, database query registration information (*e.g.,* for one or more queries) associated with similar components can be stored in a similar queue. Thus, database query registration information can also be grouped *via* the component(s). However, it is to be appreciated that non-homogenous storage can also be utilized. In addition, the queue(s) utilized to store database query registration information can be a default, based on the database query registration information and/or selected through other techniques, for example.

Moreover, it is to be appreciated that more than one notification delivery service can be activated. For example, in one aspect of the present invention a plurality of notification delivery services can be activated to access a similar queue to mitigate the build up of database query registration information in the queue. In another aspect of the present invention, the notification delivery service 130 can access more than one of the queues 120, and can route change messages to one or more components. In yet another aspect of the present invention, a plurality of notification delivery services can be activated to access a plurality of the queues 120.

While Fig. 1 is a block diagram illustrating components for the database change message delivery system 100, it is to be appreciated that the service broker 110, the first queue 120₁ through the Nth queue 120_{N}, and the notification delivery service 130 can be implemented as one or more computer components, as that term is defined herein. Thus, it is to be understood that computer executable components operable to implement the database change message delivery system 100, the service broker 110, the first queue 120₁ through the Nth queue 120_{N} and/or the notification deliver service 130 can be stored on computer readable media including, but not limited to, an ASIC (application specific integrated circuit), CD (compact disc). DVD (digital video disk). ROM (read only memory), floppy disk, hard disk, EEPROM (electrically erasable programmable read only memory) and memory stick in accordance with the present invention.

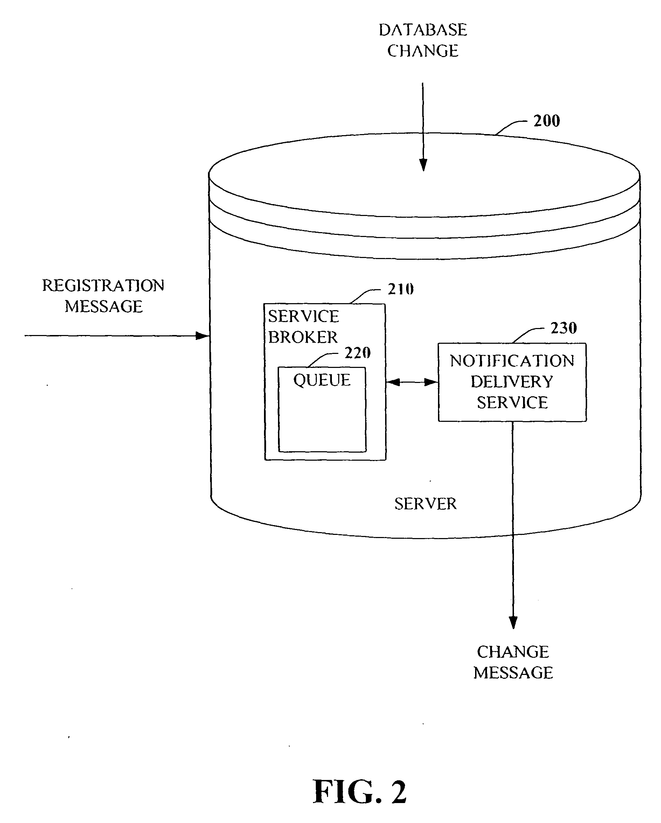

Next at Fig. 2, an exemplary server 200 in accordance with an aspect of the present invention is illustrated. The server 200 comprises a service broker 210 to facilitate storing and conveying database query registration information, a queue 220 to store database query registration information and a notification delivery service 230 to transmit a change message indicating that the registered database query results may have changed.

The service broker 210 facilitates storing and transmitting database query registration information. As noted *supra,* database registration information is assembled after a request to register, or subscribe, a database query. The database query registration information can then be transmitted to the server 200 as a message, for example. A typical database registration message is constructed as an XML based file (*e.g.*, a "cookie"), and generally includes at least one of a unique identifier, a delivery address, a queue name and a time-out period.

After the server 200 receives a database change request that would change the results of a subsequent query *via* the registered database query, the database query registration information is provided to the service broker 210. It is to be appreciated that various techniques can be employed to determine whether a database change occurred and whether the change will affect the results of the registered database query.

The service broker 210 stores at least a portion of the database query registration information (e.g., the delivery address and the unique identifier) in the queue 220 and invokes the notification delivery service 230. The queue 220 employed is typically determined by extracting the queue name from the database query registration information.

In practice, a default queue name or an optimally selected queue (e.g., based in part on probability, statistics, learning models (e.g., neural networks) and/or adaptive techniques) is employed. If the query registration information does not include a valid queue name and/or a queue is not accessible (e.g., does not exist), then an associated query(ies) may fail, a subsequent update to the associated data may fail, and/or a warning (along with results, if the query registration information was submitted concurrently with a query) may be returned that indicates that query registration failed, for example.

Invocation of the notification delivery service 230 includes activating the notification delivery service 230, if it is not already active. Providing an activation mechanism mitigates the overhead associated with configuring and/or manually initiating the notification delivery service 230 prior to a database change that would affect the results of the registered query. However, the notification delivery service 230 and the queue 220 can be pre-configured, if desired. In addition, the activation mechanism provides "handshaking" to verify communication to mitigate transmitting information that can be lost if the notification delivery service 230 is not activated. It is to be appreciated that the notification delivery service 230 can additionally be activated by another component(s), for example upon system startup (*e.g.,* a hard boot and a soft boot). by an external stimulus and/or a user.

An activated notification delivery service 230 can access the queue 220. The activation period is typically determined by a parameter that can be provided *via* the database query registration information, additional information transmitted prior to, concurrent with and/or subsequent to the database query registration information, during set-up (*e.g.*, configuration) of the notification delivery service 230, dynamically while the notification delivery service 230 is activated and/or as a default, for example. The parameter can specify an absolute length of time (*e.g.,* "X" seconds after being activated). a number of queue entries to service (*e.g.*, for "Y" entries in the queue 220), and/or a period of inactivity (*e.g.*, if no new database query registration information is delivered to the queue 220 for a specified period of time), for example. It is to be appreciated that the period of time can be based on information such as a default value, the database query registration information, server load and/or adaptive techniques, for example. After the activation period expires, the notification deliver service 130 can be deactivated to a passive state.

The activation period can additionally be employed as an optimization technique. For example, the activation period can be utilized to maintain a connection between the notification delivery service 230 and the queue 220 when registered databases are frequently changed. Maintaining the connection mitigates the cost of frequently activating the notification delivery service 230. Furthermore, the activation period can be set to "always on'' to sustain communication. Moreover, a default activation period and/or an activation period based in part on heuristics can be employed.

Once active, the notification delivery service 230 accesses the database query registration information stored in the queue 220. The database query registration information is utilized to construct and transmit a change message that indicates subsequent execution of the registered query would return a different result. The database query registration information typically includes a delivery address signifying where to send the change message. The delivery address can be extracted and employed to transmit the change message. In addition, the database query registration information typically includes a unique identifier that can be utilized in the change message to facilitate the notification runtime service (described below) with delivering an invalidation notification (e.g., raise an event and set a flag) to a component(s) that registered to receive the notification.

The database change request noted above can be committed and/or held back. In one instance, an asynchronous model can be employed wherein a database change can be committed regardless of whether the notification delivery service 230 processed the database query registration information in the queue 220. An advantage of an asynchronous model is that the notification delivery service 230 can access the database query registration information at a later time, and it affords scalability by allowing more than one entry in the queue 220, wherein one or more notification delivery services can access the queue 220, serially and/or concurrently.

In another instance, a synchronous model can be employed wherein a database change is blocked until the associated database query registration information is accessed by the notification delivery service 230 and/or a change message is transmitted and/or received (e.g., by the notification runtime service described below). The synchronous model affords reliability and robust, or consistent, data by ensuring a change message is transmitted and/or received prior to committing the database change

Various techniques can be employed to determine whether the database change message is delivered and/or received. A first technique involves an acknowledgment (*e.g.*, ACK) from the receiving device. The ACK can indicate a successful (*e.g.*, uncorrupted) transmission of the change message and can invoke the commitment of the database change. A second technique involves receiving a negative acknowledgment (NAK) and/or no acknowledgment from the receiving device that can indicate an unsuccessful transmission, wherein the database change is held back, postponed and/or delayed until the change message is successfully transmitted to its intended receive) (s) and/or recipients), in a third technique. Packet Internet Groper (Ping) can be employed to determine if communication exists between the notification delivery service 230 and the receiving device. The notification delivery service 230 can send a data packet to the receiving device (*e.g.,* the notification runtime service) and wait for a reply. The data packet can be sent prior to, concurrent with or subsequent to the change message. A reply from the receiving device can verify that communication exists.

It is to be appreciated that although the service broker 210 is illustrated within the server 200, the service broker 210 can reside in a client or in another server. In addition. the service broker 210 can be a database (*e.g.*, SQL based), and can include more than one queue 220 and/or notification delivery service 230. Furthermore, it is to be appreciated that more than one notification delivery service can be employed as described above. For example, more than one notification delivery service can access the queue 220. In addition, more than one notification delivery service can access a plurality of queues (*e.g.*, queues 120), serially and/or concurrently, including a substantially similar queue (*e.g.*, queue 220).

Moreover, it is to be appreciated that an intermediate component (not shown) can be utilized during the transmission of database query registration information from the queue 220 to the notification delivery service 230. For example, the database query registration information can be stored on another medium prior to being accessed by the notification delivery service 230. In one aspect of the invention, the database query registration information can be saved to a log file. Subsequently, the notification delivery service 230 utilizes the database query registration information from the log file. In another aspect of the present invention, a buffer can be utilized to expedite transmitting database query registration information to the notification delivery service 230. In yet another aspect of the present invention, database query registration information can be off-loaded to the intermediate component or the like to free up resources associated with a database and/or the service broker 210 in order to improve performance, for example. It is to he appreciated that providing for an intermediate component increases system flexibility.

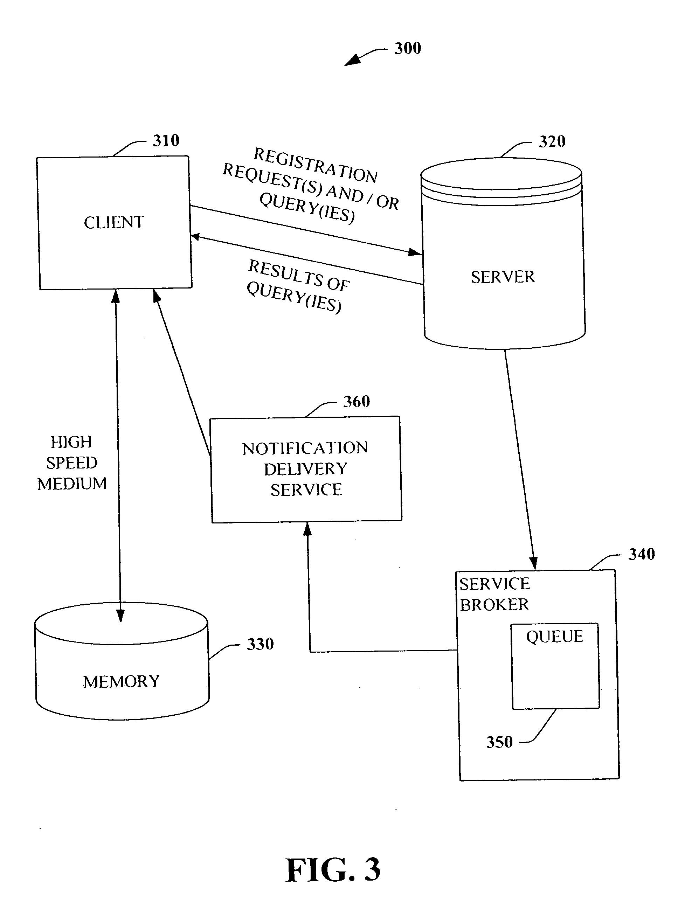

Referring now to Fig. 3, an exemplary data invalidation system 300 in accordance with an aspect of the present invention is illustrated. The data invalidation system 300 comprises a client 310, a server 320, a memory 330, a service broker 340, a queue 350, and a notification delivery service 350.

The client 310 can include a mechanism(s) (not shown) to register a database query(ies) with the server 320 and to receive an associated change message from a notification delivery service, as described herein. Registration typically comprises constructing a database registration message that includes database query registration information, a delivery address, a unique identifier (*e.g.,* a globally unique identifier, or GUID), a queue name, a time-out period, and optionally additional information such as communication (*e.g.,* protocol and port) and security (*e.g.*, encryption and authentication) options, for example. The database registration message can then be transmitted to the server 320. It is to be appreciated that more than one client (*e.g.*, more than one client 310) and/or other component(s) can register one or more database queries, serially and/or concurrently, and in accordance with an aspect of the present invention. Furthermore, a plurality of clients can register queries that return substantially similar results.

In one aspect of the present invention, the database registration message can be transmitted to the server 320 with a query (*e.g.*, a query associated with the database query registration information included in the database registration message). The query results can be stored in the memory 330 and/or in other storage devices, including storage on a web server. Storing the results in the memory 330 provides the client 310, as well as any other clients, the ability to utilize the stored results instead of performing subsequent queries when the subsequent queries would return substantially similar results. In another aspect of the present invention, the database registration message can be transmitted to the server 320 without requesting results. For example, a client can register a query that is substantially similar to a previously executed query, wherein the results of the previously executed query were saved to the memory 330 and can be utilized by the client. In another example, a client can register a query that affects the results of a different query that is associated with the client. In yet another example, a client can register to receive an invalidation notification for any change to the database, if desired.

It is to be appreciated that the stored query results can include raw data, transformed data and/or queryable data, for example. Raw data is flexible, and various transformation techniques can be utilized to provide alternative representations of the raw data. For example, the raw data can be represented as alpha-numeric text, symbolically, in graphs, tables and charts, and utilizing other known forms and/or formats. Storing transformed data, or objects, saves transformation time, and can leverage existing support (*e.g.,* a response cache). Queryable data can be utilized *via* subsequent requests that employ the queryable data set or a subset of the queryable data set. For example, the queryable data set can comprise a plurality of categories, and a subsequent request can query the data set for the plurality of categories and/or a subset of the plurality of categories.

After the server 320 receives a database change request, the database query registration information in the database registration message is provided to the service broker 340. The service broker 340 places at least a portion of the database query registration information in the queue 350, and activates the notification delivery service 360. As noted previously, the database change request can be committed asynchronously or synchronously.

The notification delivery service 360 then utilizes the database query registration information to construct and deliver a change message to the client 310. For example, the notification delivery service 360 can extract and utilize the delivery address and the unique identifier (*e.g.*, GUID) from the database query registration information. The unique identifier is typically included within the change message, and the change message is generally delivered to the delivery address (*e.g.*, the notification runtime service associated with the client 310).

After receiving the change message, the unique identifier can be extracted and employed to notify the client 310. After which, the client 310 can determine subsequent action(s). For example, in one aspect of the present invention, the client 310 can perform another query to refresh and display and/or store the refreshed results. In another aspect of the invention, the client 310 can decide to continue to display or employ the results in memory 330 even though the results are inconsistent with the results that would be returned by a subsequent query. In yet another aspect of the present invention, the client 310 can register the database query again and/or employ an automatic re-registration in order to receive a notification when another change occurs (e.g., a change that would alter query results). In still another aspect of the present invention, the change notification may trigger other processing, such as logging the change information and/or taking action based on the changed data, for example.

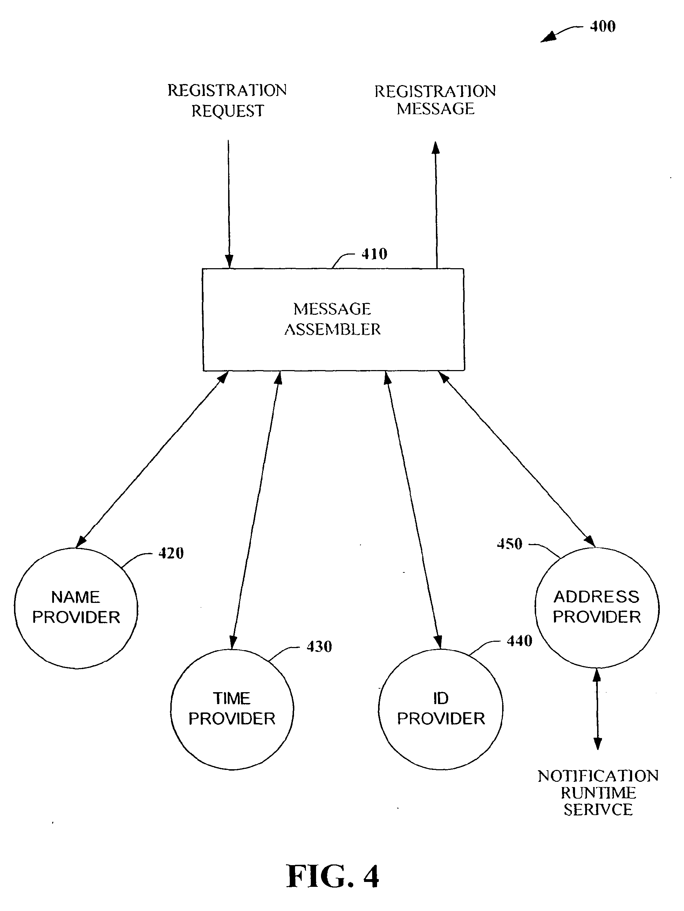

Fig. 4 illustrates an exemplary registration system 400 in accordance with an aspect of the present invention. The registration system 400 can be employed to facilitate registration of a database query (*e.g.*, with servers 200 and 320, and any SQL based server). The registration system 400 comprises a message assembler 410, a name provider 420, a time provider 430, an ID provider 440, and an address provider 450.

The message assembler 410 accepts database query registration requests (*e.g.*, subscriptions), coordinates packaging the database query registration information and transmits database query registration information that can be employed by systems like systems 100 - 300. As previously noted, the database query registration information typically includes a queue name, a time-out period, a unique identifier, and a delivery address. However, it is to be appreciated that foregoing database query registration information is not intended to limit the present invention. Other suitable information can be employed in accordance with the present invention. Furthermore, various ordering of the database query registration information can be employed in accordance with an aspect of the present invention.

The message assembler 410 can obtain the database query registration information from one or more of the providers 420 - 450 and/or other components (*e.g.*, a notification runtime service and/or a universal listener, described herein). The name provider 420 can be employed to provide the name of a queue (*e.g.*, the name of one of the queues 120) to store database query registration information associated with a registered database query(s) after a database change occurs that would render the state of the database inconsistent with the previous results returned. For example, the name provider 420 can randomly select a queue name from one or more available queues, provide a user defined queue name, and/or provide a default queue name. In another aspect of the invention, a queue name can be included with the database query registration request such that the name provider 420 is not employed.

The time provider 430 can provide a time-out period for a registered database query. The time-out period can specify a time duration or expiration period, wherein when the time-out period lapses, the database query registration information invokes a change message, even if a database change has not occurred, to indicate that the time-out period has lapsed. This can notify a user that any stored results corresponding to the registered database query may no longer be reliable and/or accurate without the server having to retain registration information over long periods of time for database queries that may no longer be of interest to the user.

The ID provider 440 is employed to assign a unique identifier (*e.g.,* a globally unique identifier, or GUID) for the subscription. Generally, the unique identifier provides a mechanism to associate the database query(s) being registered with the component(s) (*e.g.*, client, object instance and dependency), that is requesting the subscription. The association can be with a command, view, table and/or resource, for example. The unique identifier can be employed to route an invalidation notification to the requesting component(s).

The address provider 450 is employed to provide a delivery address. The delivery address is utilized by a notification delivery service when transmitting change message in response to a database change that would affect the results of the registered query. The delivery address indicates the destination address for the change message. For example, the delivery address is associated with a notification runtime service and/or universal listener (*e.g.*, HTTP.sys) that is registered with the subscription. It is to be appreciated that alternative components and systems can be utilized to obtain the delivery address. For example, the notification runtime service and/or the universal listener can be employed to provide a delivery address *via* the address provider 450 and/or through other techniques, for example without any intermediate components.

After obtaining the database query registration information, the message assembler 410 constructs a database query registration message. Generally, the database query registration message includes the unique identifier, the delivery address, the queue name and the time-out period. It is to be appreciated that the database query registration information can be variously positioned and formatted within the message. For example, in one aspect of the invention, the database query registration information is a delimited string that can be parsed. In another aspect of the invention, a binary representation of the database query registration information is employed. In yet another aspect of the invention, at least a portion of the database query registration information is utilized to form a "cookie." For example, the delivery address and the unique identifier can be provided as a "cookie" and/or markup language (*e.g.*, XML) based message.

The message assembler 410 then transmits the database query registration message. It is to be appreciated that the message can be transmitted prior to, concurrently with and/or subsequent to a query. Additionally, the message can be transmitted in a command (*e.g.*, an execute command) and/or with a stored procedure. When a database change occurs that changes the results of the registered database query, the database query registration information can be utilized to facilitate delivery of an invalidation notification to the component(s) that registered to receive notification.

It is to be appreciated that the registration system 400, the message assembler 410, the name provider 420, the time provider 430, the ID provider 430, and the address provider 440 can be computer components as that term is defined herein.

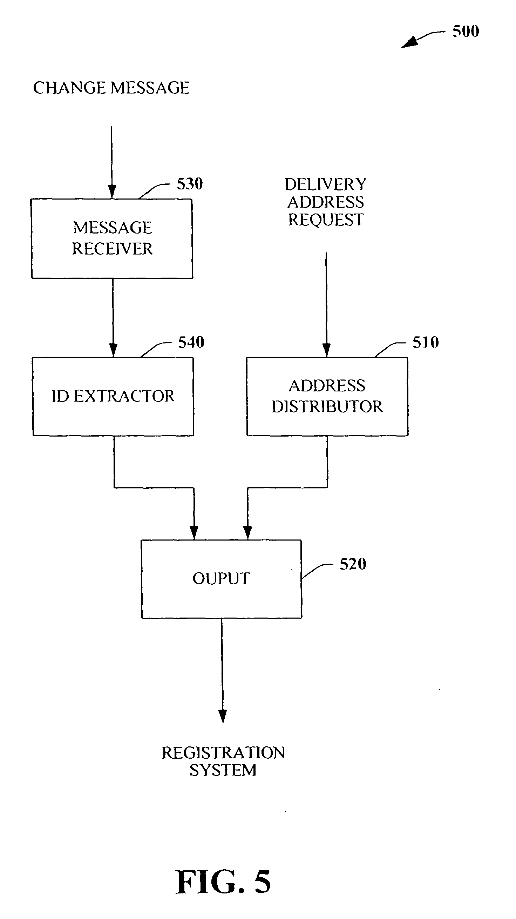

Fig. 5 illustrates an exemplary notification system 500 in accordance with an aspect of the present invention, the notification system 500 comprises an address distributor 510, an output component 520, a message receiver 530, and an ID extractor 540.

The notification system 500 is generally activated after a database query registration request is received. For example, after receiving a database query registration request, a registration component (*e.g.*, the registration system 400) can activate the notification system 500.

After activation, the notification system 500 can be employed to obtain a delivery address for a database query registration message and/or utilized to facilitate providing an invalidation notification. The address distributor 510 can be utilized to obtain a delivery address. After the address distributor 510 receives a delivery address request (*e.g.*, through registering with a notification runtime service and/or an universal listener, as described below), a delivery address is obtained and provided to the output component 520. The delivery address is then routed to the requesting component (*e.g.*, the registration system 400).

The notification system 500 can additionally accept change messages. For example, a notification delivery services (as described herein) can be employed to transmit a change message to the notification system 500. The message receiver 530 accepts change messages. The message receiver 530 can employ various security and validation techniques to mitigate forwarding erroneous change messages. For example, authentication certificates and/or unique identifier verification can be employed in accordance with an aspect of the present invention. The message receiver 530 then provides the change message to the ID extractor 540. The ID extractor 540 obtains the unique identifier from within the database query registration message.

The unique identifier is then utilized by the output device 520 to route an invalidation notification to the component(s) that registered to receive the notification. For example, in one aspect of the present invention any client that is associated with the registration instance assigned to the unique identifier is provided with a notification (*e.g.*, an event). In another aspect of the present invention, a flag and/or other descriptor is employed to notify any client, that attempts to utilize previously returned query results that the results have become invalid.

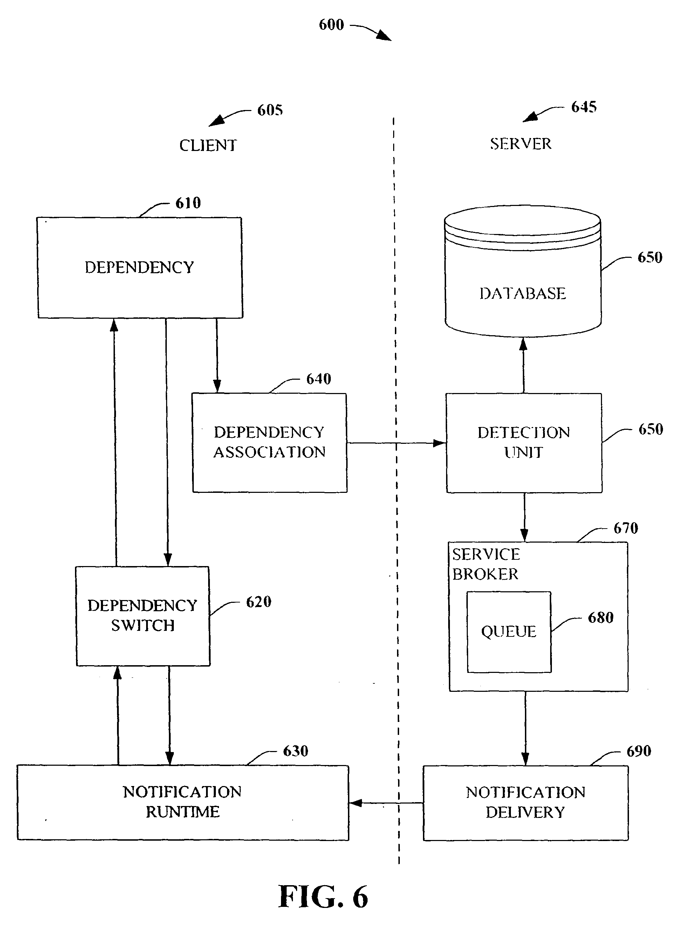

Fig. 6 illustrates an exemplary client-server system 600 in accordance with an aspect of the present invention. It is to be appreciated the client-server system 600 can be an SQL based client-server. The client-server system 600 comprises a client 605 that includes a dependency instance 610, an optional dependency switch 620, a notification runtime service 630 and a dependency association 640, and a server 645 that includes a detection unit 650, a database 660, a service broker 670, a queue 680 and a notification delivery service 690.

The client 605 initiates registration via a database query registration request. Typically, the database query registration request includes a queue name and/or time-out period. However, it is to be appreciated that a default value can be utilized for the foregoing as well as for other options. A dependency instance 610 is created to represent the registration request and provide the association between one or more registered queries and the client 605 to be notified. Upon creation, the dependency component 610 obtains a unique identifier for the request. It is to be appreciated that a single dependency instance 610 can be associated with one or more registered queries, wherein a change that would affect the results of any one of the queries generates a notification (*e.g.*, a result generated from several database queries is invalidated if a change occurs to the result of any of the queries). The uniqueness of the identifier can correspond to the grouping of registered queries, wherein one or more of the queries can invalidate an aggregated result upon the database change. For example, a different unique identifier can be obtained for a result that is affected by a different set of registered queries.

The unique identifier is utilized to register with a notification runtime service through the optional dependency switch 620, wherein the dependency instance 610 provides the unique identifier and registers with the dependency switch 620, and then the dependency switch 620 provides the unique identifier and registers with the notification runtime service 630. If the dependency switch 620 and/or the notification runtime service 630 are not active, then the dependency switch 620 and/or the notification runtime service 630 are launched prior to registering. After registration, the notification runtime service 630 provides a delivery address to the dependency instance 610. It is to be appreciated that the optional dependency switch 620 is employed as an optimization technique, and when not utilized, the dependency instance 610 can register with the notification runtime service 630 without prior registration with an intermediate component such as the optional dependency switch 620. In addition, the notification runtime service employed can be selected by one of a default, a client capability(s), database query registration information, configuration, statistics, and/or adaptive technologies.

The foregoing registration technique can mitigate cross-references between processes *via* providing one or more dependency instances (*e.g.,* the dependency instance 610) within a process a means to register with a dependency switch (*e.g.*, the dependency switch 620) within the process, wherein the dependency switch and/or other dependency switches from a plurality of processes (*e.g.*, dependency switch 620 and the like) can register a cross-process reference with the notification runtime service 630.

The delivery address, the unique identifier, the queue name, the time-out period and/or additional information are then provided to the dependency association 640, and subsequently transmitted in a registration message to the sever 645. It is to be appreciated that the dependency instance 610 (as well as other dependency instances) can be associated with one or more client components and included in a plurality of query registrations wherein a change to the results of any of the registered query(s) results in a substantially similar client action(s). As noted above, the server 645 comprises the detection unit 650, the database 660, the service broker 670, the queue 680 and the notification delivery service 690.

The detection unit 650 can be employed to maintain the database query registration information and determine when to invoke an invalidation for a registered query(s). For example, when a request to change the database 660 is received, the database query registration information can be utilized to determine whether a registered query is associated with the change. If the results of a registered query would change, then at least the database query registration information can be provided to the service broker 670. It is to he appreciated that the detection unit 650 can transmit additional information such as an invalidation reason (*e.g.*, a database change (as noted above), a time-out period expired, memory limitation, query complexity, server reboot and system error), an indication of the nature of the database change (*e.g.*, insert, delete, update and schema change), and/or the content of the change (*e.g.*, original and/or current values).

After transmitting the database query registration information to the service broker 670, the detection unit 650 can discard (*e.g.*, automatically un-register) or retain the database query registration information. Discarding the database query registration information ensures that a subsequent change will not elicit another invalidation for the query (*e.g.*, when the component registering the query no longer is interested in receiving a notification). Suitable techniques for discarding database query registration information include a static discard (*e.g.*, discard after invoking an invalidation), a discard based at least in part on the database query registration information (*e.g.*, a discard field or parameter), a discard based at least in part on a response from the notification runtime service (*e.g.*, retain the database query registration information if there are still associated components listening for invalidations, otherwise discard), and a discard based on a subsequent registration message that supercedes a prior registration message. Retaining the database query registration information provides the ability to receive additional invalidations associated with subsequent database changes.

After receiving the database query registration information from the detection unit 650, the service broker 670 facilitates storing and transmitting the database query registration information to a notification delivery service. The service broker 670 places the database query registration information in the queue 680, and the service broker 670 invokes the notification delivery service 690, if so configured. While active, the notification delivery service 690 can utilize the database query registration information in the queue 680 to construct a change message indicating the results of the registered query have changed due to a database change (*e.g.*, subsequent results have become invalid and/or inconsistent with previously retrieved results). It is to be appreciated that the detection unit 650 can also provide the database query registration information to the notification delivery service 690 to invoke a change message for a registered query(s).

The notification delivery service 690 employs at least a portion of the database query registration information to route the change message to the notification runtime service 630 of the client 605. The notification runtime service 630 utilizes the dependency unique identifier within the change message to route the notification to the corresponding dependency instance 610 (optionally through the dependency switch 620). The dependency instance 610 then informs the client 605 of the change. For example. after the dependency 610 receives a notification, a dependency event can be raised and/or a flag can be set to raise an event when a subsequent attempt to register with the dependency instance occurs, it is to be appreciated that more than one client can register to receive the notification, and that the dependency instance 610 can serially and/or concurrently inform the client 605 and another client(s) residing on a similar and/or different machine. Furthermore, the client 605 (or other client instantiating the dependency instance 610) may no longer exist when the change occurs. However, the other client(s), if any, registered to receive notification can be informed by the dependency instance 610.

It is to be appreciated that various techniques can be employed to mitigate employing inconsistent query results due to lost communication between the notification runtime service 630 and the notification delivery service 690. For example, ACK / NAK communication codes can be employed to acknowledge error-free transmission and indicate corrupt transmission and/or no transmission. In another aspect of the invention, the notification runtime service 630 can poll the notification delivery service 690. If successful, then communication is verified. In yet another example, the notification runtime service 630 can be "shut down." The notification runtime service 630 can provide a notification (*e.g.*, the database state is unknown) prior to completing shut down. The notification delivery service 690 can similarly be employed. For example, the notification delivery service 690 can poll the notification runtime service 640. If successful, then communication is validated. If unsuccessful, a database change can be held back, or not committed, until the notification delivery service 690 can deliver the change message.

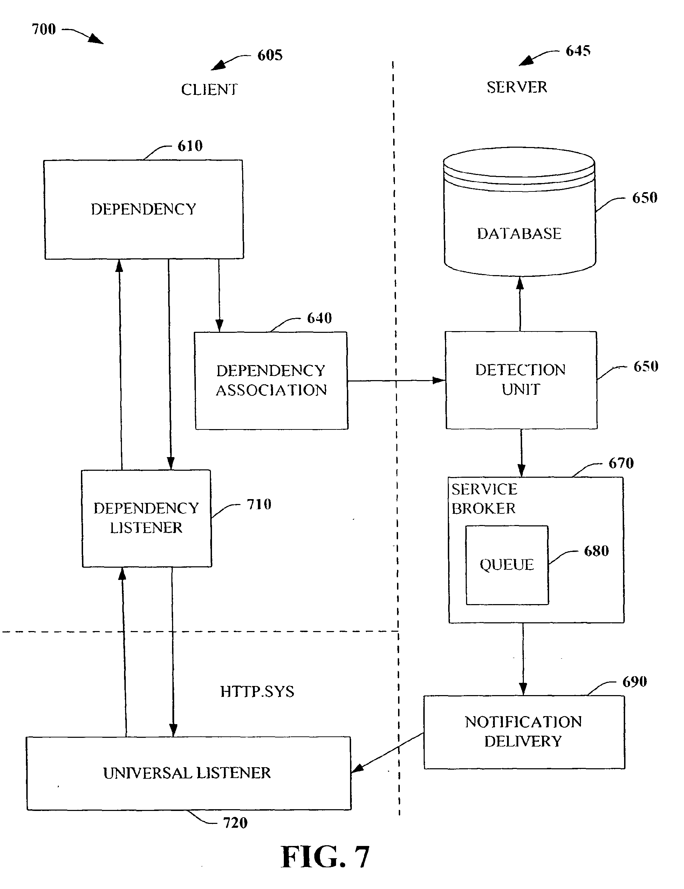

Fig. 7 Illustrates another exemplary client-server system 700 in accordance with an aspect of the present invention. Like the client-server system 600, the client-server system 600 comprises the client 605 that includes the dependency instance 610, and the dependency association 640, and the server 645 that includes the detection unit 650, the database 660, the service broker 670, the queue 680 and the notification delivery service 690. Additionally, the client 605 further includes a dependency listener 710, and the client-server system 700 further includes a universal listener 720 operative to the client 605 and the server 645.

As discussed *supra,* the client 605 initiates registration *via* a database query registration request, which can include the creation of a dependency instance 610. Creation of the dependency instance 610 generates a unique identifier (*e.g.*, GUID), which is then used to register with the dependency listener 710. The dependency listener 710 (as well as other dependency listeners) generates a unique URI to register with the universal listener 720 (*e.g.*, HTTP.sys or a kernel-mode device driver that routes HTTP requests to user-mode applications). The GUID and the URI are exposed as the unique identifier and delivery address through the dependency instance 610 and transmitted to the server 645 in the query registration message. It is to be appreciated that generation of the unique URI can be facilitated *via* a second unique identifier as part of the relative URI. In addition, the universal listener employed can be selected by one of default, a client capability(s), database query registration information, configuration, statistics, and/or adaptive technologies.

The query registration message is received and managed by a detection unit 650, which detects database changes associated with a registered database query(s), and provides the database query registration information to the service broker 670 when a database change occurs wherein subsequent execution of the registered query would return a different result. As noted above, the detection unit 650 can transmit other information, and can maintain the database query registration information for subsequent database changes, or cancel a query(s) registration (*e.g.,* unregister).

The service broker 670 facilitates storing and transmitting the database query registration information to the notification delivery service 690. The service broker 670 places the database query registration information in the queue 680, and the service broker 670 invokes the notification delivery service 690. The activated notification delivery service 690 can utilize the database query registration information to construct and transmit a change message.

The notification delivery service 690 employs at least a portion of the database query registration information in the change message, and provides the change message as an HTTP request, for example, to the universal listener 720. The universal listener 720 utilizes the relative path within the URI to route the request to the dependency listener 710. The dependency listener 710 can utilize the database query registration information (*e.g.,* the dependency unique identifier) to route the change message to the dependency instance 610 to inform any clients, including the client 605, registered to receive an invalidation notification. Similar to the client-server system 600, various techniques (*e.g.*, ACK/NAK, Ping, and automatic invalidation) can be employed to mitigate employing inconsistent query results due to lost communication between the universal listener 720 and the notification delivery service 690.

It is to be appreciated that employing the dependency listener 710 and the universal listener 720 mitigates installing and activating (*e.g.*, launching) services such as a notification runtime service on the client 605. In addition, change messages and/or invalidation notifications can be transmitted through a firewall since port 80 can be employed. However, it is to be appreciated that the port can be configurable and that any port can be utilized.

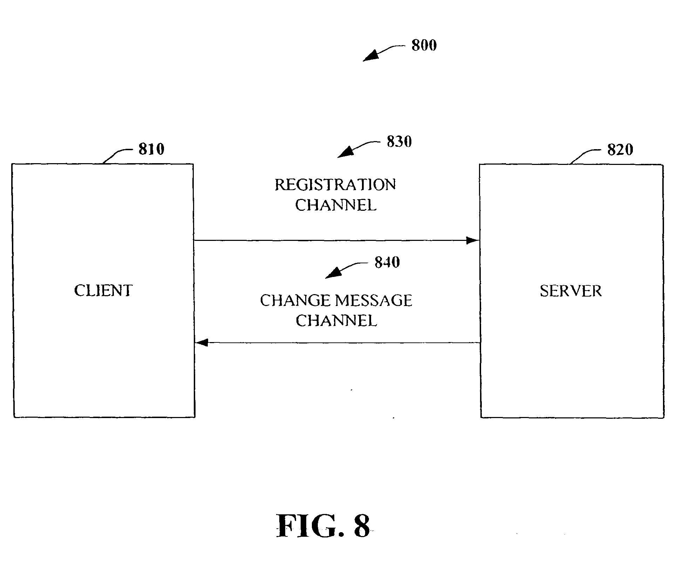

Fig. 8 illustrates exemplary security techniques in accordance with an aspect of the present invention. The system 800 comprises a client 810, a server 820, a registration request channel 830 and a change message channel 840.

As noted previously, a client initiates a database query registration or subscription. For example, the client 810 requests a database query subscription, which optionally includes a queue name and time-out period. Subsequently, additional database query registration information is obtained, and a database query registration message is constructed. The database query registration message typically includes a delivery address, a unique identifier, a queue name and a time-out period, but can include additional and/or other information. Once assembled, the database query registration information is transmitted to the server 820 over the registration channel 830. Then, after the server 820 receives a database change request, a detection mechanism or the like in the server 820 is employed to determine when a database change would change subsequent query results of a registered query. Then, a change message can be dispatched over the change message channel 840 to the client 810.

The unique identifier (*e.g.*, GUID) included in the database query registration message can provide a security mechanism for the database query registration messages. For example, in one aspect of the present invention the GUID is created at runtime when a database query registration request is received, thereby mitigating the opportunity to "guess," or mimic the GUID. The unique identifier is then be propagated through the server 820 and included in the change message. A malicious source that attempts to interject a simulated database change message into the change message channel 840 in an attempt to falsely notify clients that a registered database changed will be ignored if the unique identifier does not represent a valid registration. Additionally, other security techniques can be employed (*e.g.*, authentication certificates) in accordance with an aspect of the invention.

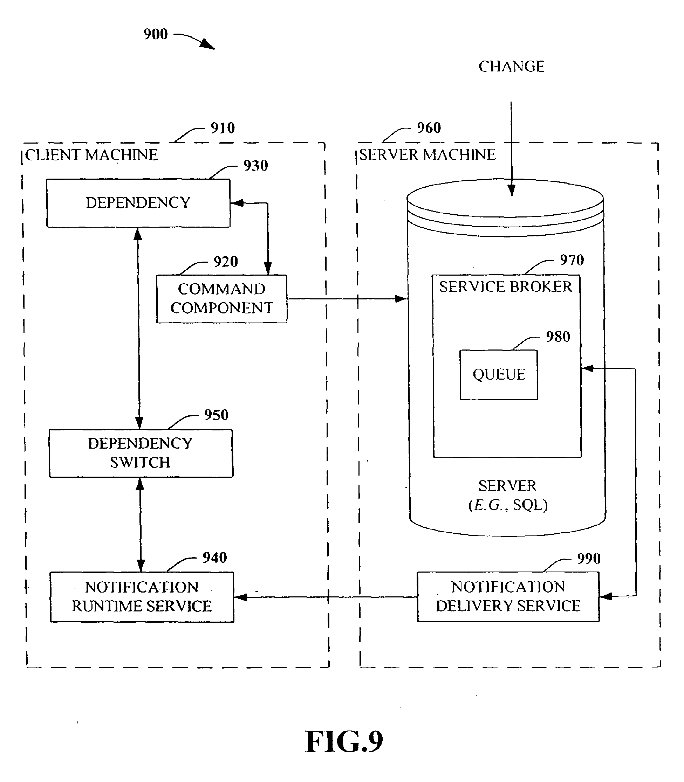

Proceeding to Fig. 9, an exemplary client-server system 900 in accordance with an aspect of the present invention is illustrated. The client-server 900 comprises a client machine 910 comprising a command component 920, a dependency 930, a notification runtime service 940 and an optional dependency switch 950, and a server 960 comprising a service broker 970, a queue 980 and a notification delivery service 990.

Generally a client(s) instantiates the dependency 930 (e.g., object) which generates a unique identifier. The client typically provides a queue name and a time-out period, *via* a constructor and/or method; however, a default and/or other queue name and a time-out period can be employed. Subsequently, the dependency 930 registers with the notification runtime service 940 through the optional dependency switch 950 if the dependency switch 950 is employed. If the optional dependency switch 950 is not utilized, then registration occurs between the dependency 930 and the notification runtime service 940, without any intermediate components. The notification runtime service 940 then provides a delivery address to the dependency 930. The client then generally instantiates a command component 920 (*e.g.*, a derived object) and associates it with the dependency 930. A queue name, a time-out period, the delivery address and the unique identifier are provided to the command component 920. The command component 920 then registers the database query with the server machine 960, for example *via* invoking a method wherein the queue name, time-out period, delivery address and unique identifier, for example, are transmitted as a database query registration message (*e.g.*, a markup language (*e.g.*, XML) file), it is to be appreciated that the dependency 930 can be associated with more than one command component 920 (as well as other command components), wherein a command component(s) can register a similar and/or different database query with a substantially similar database query registration message.

As noted above, the server machine 960 comprises the service broker 970, the queue 980 and the notification delivery service 990. The server machine 960 can employ various techniques for detecting database changes. For example, when a database change request is received, a search for a registered query(s) is initialized to determine whether the results of a subsequent query would change. Database query registration information associated with the changed database can be provided to the service broker 970. The service broker 970 can store the database query registration information in the queue 980 and activate the notification delivery service 990.

The notification delivery service 990 utilizes the database query registration information to construct and transmit a change message to the notification runtime service 940. Subsequently, the notification runtime service 940 extracts the unique identifier, and utilizes the unique identifier to route the message to the corresponding dependency 930. The dependency 930 then notifies the client associated with the changed database. For example, the dependency can raise an event for applications associated with the changed data table and/or set a flag to raise an event when an application attempts to associate with the changed data table

It is to be appreciated that similar to the client-server system 700, a dependency listener (not shown) and a universal listener (not shown) can be employed with the client server system 900, in accordance with an aspect of the present invention. For example, a dependency listener can register a unique URI with the universal listener and maintain a correspondence between the unique identifier and the dependency instance. The unique identifier and the URI can be included in a database query registration message that is transmitted to the server. After a database change occurs that would affect the results of a subsequent query, the notification delivery service 990 can construct and transmit an HTTP request, for example, to deliver the change message to the universal listener. The universal listener can utilize the unique URI to route the request to the dependency listener. The dependency listener can employ the unique identifier within the change message to cause the corresponding dependency to inform any client(s) registered to receive an invalidation notification.

As noted *supra*, employing a dependency listener and a universal listener mitigates installing and activating services (*e.g.*, a notification runtime service) on a client. Additionally, the port can be configurable, enabling the selection of port 80, for example, such that transmission can occur through a firewall.

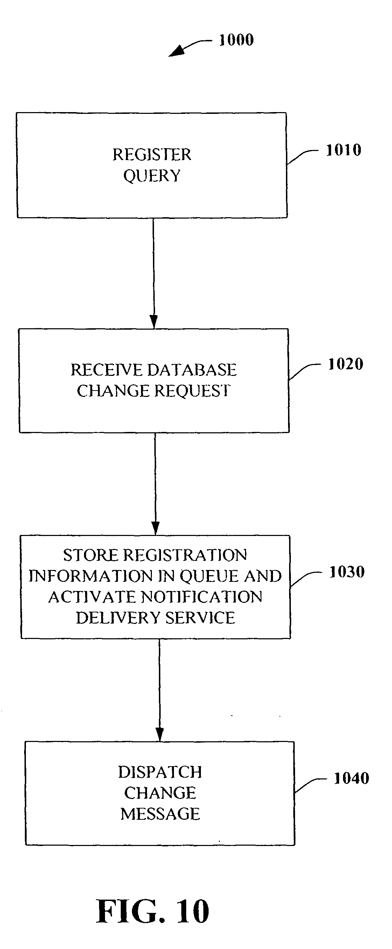

Figs. 10-12 illustrate methodologies in accordance with the present invention. For simplicity of explanation, the methodologies are depicted and described as a series of acts. It is to be understood and appreciated that the present invention is not limited by the acts illustrated and/or by the order of acts, for example acts can occur in various orders and/or concurrently, and with other acts not presented and described herein. Furthermore, not all illustrated acts may be required to implement a methodology in accordance with the present invention.

In addition, those skilled in the art will understand and appreciate that a methodology could alternatively be represented as a series of interrelated states (*e.g.*, state diagram) or events. Moreover, the invention may be described in the general context of computer-executable instructions, such as program modules, executed by one or more components. Generally, program modules include routines, programs, objects, data structures. *etc*, that perform particular tasks or implement particular abstract data types. Typically the functionality of the program modules may be combined or distributed as desired in various embodiments.

Fig. 10 illustrates a registration and delivery methodology 1000 in accordance with an aspect of the present invention. The registration and delivery methodology 1000 can be employed to deliver a change message after a database change request is received wherein the change would alter the results of a registered query. Beginning at 1010, a component (*e.g.*, a client, an agent, an application and a user) registers a database query(ies) to receive a notification when a database change occurs that would affect the results of the registered query. Registration generally includes providing database query registration information (*e.g.,* as described in Figs. 1-9) that facilitates delivery of a change notification.

At 1020, a database change request is received. The request can include a change that would change the results of a registered query. The request initiates a mechanism to determine if the database change is associated with a registered database query. If the results of a registered query would be affected, then at least a portion of the database query registration information is provided to a service broker.

At 1030, the service broker stores the registration information in a queue and activates a notification delivery service. The database query registration information can then be made accessible to the notification delivery service. It is to be appreciated that various techniques can be employed to provide the database query registration information. For example, the database registration information can be "pushed" from the queue and/or "pulled" to the notification delivery service. Furthermore, an intermediate storage area can be employed to facilitate the transfer of database query registration information by providing a temporary storage location, for example.

The database query registration information is utilized to obtain a delivery address and a unique identifier that is employed to construct and transmit a change message. At 1040, the notification delivery service transmits the database change message. The message includes at least a portion of the registration information, and typically comprises the unique identifier. For example, an object ID can be transmitted, wherein an event is raised and/or a flag is set for application object instances. It is to be appreciated that the notification delivery service can transmit the change message to a universal listener and/or a notification runtime service, as described herein.

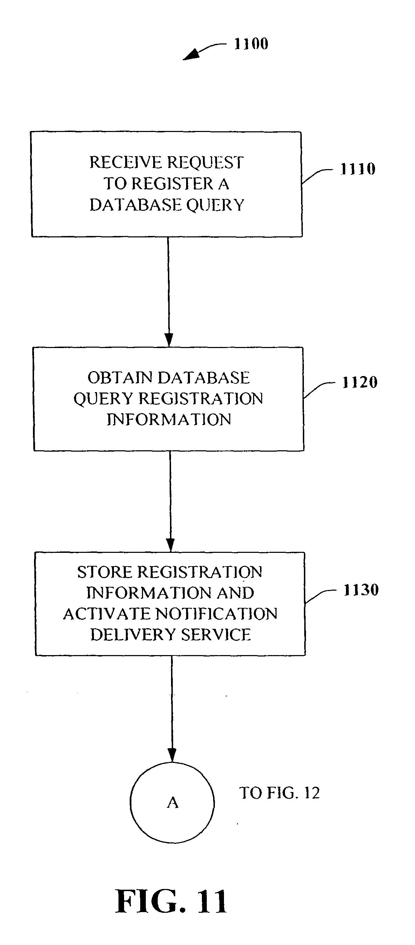

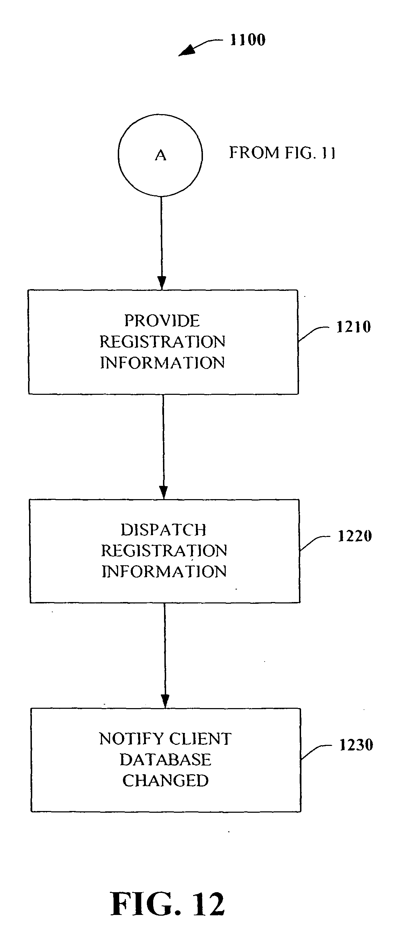

Figs. 11-12 illustrate a registration, delivery and notification methodology 1100 in accordance with an aspect of the present invention. Proceeding to Fig. 11, at reference numeral 1110 a request to register a database query is received. Optionally, the request can include a queue name and/or time-out period.

At 1120, a unique identifier and a delivery address (*e.g.*, via the dependency listener and universal listener, and/or the dependency switch and/or the notification runtime service, as described *supra*) are obtained. Other information including a queue name and/or a time-out period can additionally be obtained. Then the database query registration information is utilized to construct a database query registration message, and the database query registration message is transmitted to a server.

At 1130, the server receives and stores the database query registration information included in the database query registration message. After the server receives a database change request, a mechanism is invoked that facilitates detecting whether the change would change subsequent results of a registered query. If a registered database query is not associated with the database change, then the methodology 1100 can transition to an idle state, and wait for the next database change, for example. If the database change affects the results of a registered query(s), then the database query registration information can be provided to a service broker. The service broker stores the database query registration information in a queue (*e.g.*, a queue associated with the queue name included in the database query registration information message). The service broker additionally can activate a notification delivery service.

Moving to Fig. 12, a continuation of Fig. 11 in accordance with an aspect of the present invention is illustrated. At reference numeral 1210, the database query registration information stored in the queue is provided to the notification delivery service. Typically, the unique identifier and the delivery address are stored in the queue.

At 1220, the notification delivery service transmits a change message that typically includes the unique identifier, and delivers it to the delivery address (*e.g.*, of a notification runtime service and/or universal listener). The change message is received, and at 1230 the unique identifier in the change message can be extracted and employed to notify registered components and components subsequently attempting to register for changes to the registered query.

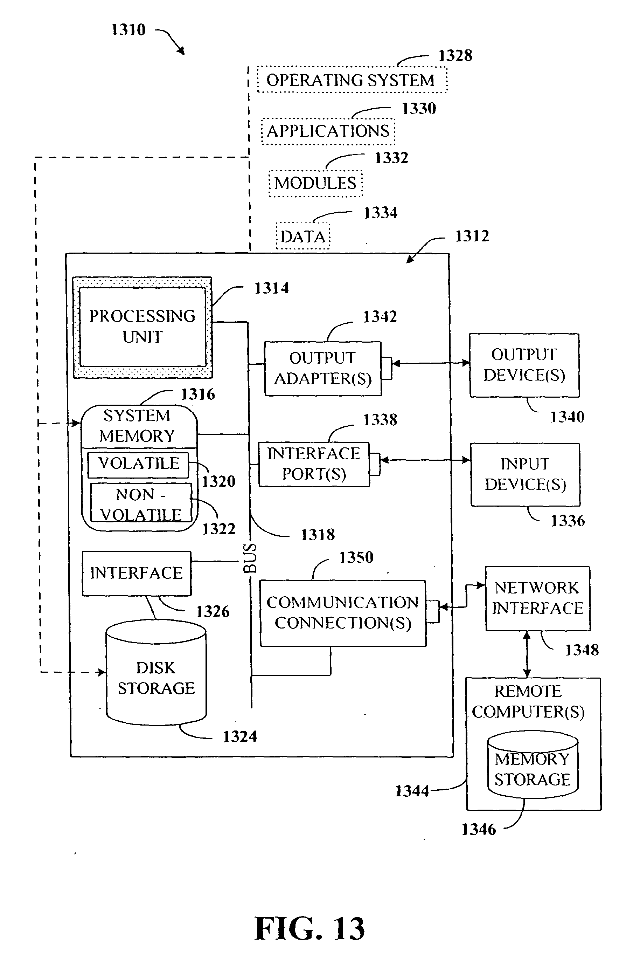

In order to provide additional context for various aspects of the present invention. Fig. 13 and the following discussion are intended to provide a brief, general description of a suitable operating environment 1310 in which various aspects of the present invention may be implemented. While the invention is described in the general context of computer-executable instructions, such as program modules, executed by one or more computers or other devices, those skilled in the art will recognize that the invention can also be implemented in combination with other program modules and/or as a combination of hardware and software. Generally, however, program modules include routines. programs, objects, components, data structures. *etc.* that perform particular tasks or implement particular data types. The operating environment 1310 is only one example of a suitable operating environment and is not intended to suggest any limitation as to the scope of use or functionality of the invention. Other well known computer systems, environments, and/or configurations that may be suitable for use with the invention include but are not limited to, personal computers, hand-held or laptop devices, multiprocessor systems, microprocessor-based systems, programmable consumer electronics, network PCs, minicomputers, mainframe computers, distributed computing environments that include the above systems or devices, and the like.

With reference to Fig. 13, an exemplary environment 1310 for implementing various aspects of the invention includes a computer 1312. The computer 1312 includes a processing unit 1314, a system memory 1316, and a system bus 1318. The system bus 1318 couples system components including, but not limited to, the system memory 1316 to the processing unit 1314. The processing unit 1314 can be any of various available processors. Dual microprocessors and other multiprocessor architectures also can be employed as the processing unit 1314.

The system bus 1318 can be any of several types of bus structure(s) including the memory bus or memory controller, a peripheral bus or external bus, and/or a local bus using any variety of available bus architectures including, but not limited to, an 8-bit bus. Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1316 includes volatile memory 1320 and nonvolatile memory 1322. The basic input/output system (BIOS), containing the basic routines to transfer information between elements within the computer 1312, such as during start-up, is stored in nonvolatile memory 1322. By way of illustration, and not limitation, nonvolatile memory 1322 can include read only memory (ROM), programmable ROM (PROM), electrically programmable ROM (EPROM), electrically erasable ROM (EEPROM), or flash memory. Volatile memory 1320 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1312 also includes removable/nonremovable, volatile/nonvolatile computer storage media. Fig. 13 illustrates, for example a disk storage 1324. Disk storage 1324 includes, but is not limited to, devices like a magnetic disk drive, floppy disk drive, tape drive, Jaz drive, Zip drive, LS-100 drive, flash memory card, or memory stick. In addition, disk storage 1324 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1324 to the system bus 1318, a removable or non-removable interface is typically used such as interface 1326.

It is to be appreciated that Fig 13 describes software that acts as an intermediary between users and the basic computer resources described in suitable operating environment 1310. Such software includes an operating system 1328. Operating system 1328, which can be stored on disk storage 1324, acts to control and allocate resources of the computer system 1312. System applications 1330 take advantage of the management of resources by operating system 1328 through program modules 1332 and program data 1334 stored either in system memory 1316 or on disk storage 1324. It is to be appreciated that the present invention can be implemented with various operating systems or combinations of operating systems.

A user enters commands or information into the computer 1312 through input device(s) 1336. Input devices 1336 include, but are not limited to a pointing device such as a mouse, trackball, stylus, touch pad, keyboard, microphone, joystick game pad, satellite dish, scanner, TV tuner card, digital camera, digital video camera, web camera, and the like. These and other input devices connect to the processing unit 1314 through the system bus 1318 *via* interface port(s) 1338. Interface port(s) 1338 include, for example, a serial port, a parallel port, a game port, and a universal serial bus (USB). Output device(s) 1340 use some of the same type of ports as input device(s) 1336. Thus, for example, a USB port may be used to provide input to computer 1312, and to output information from computer 1312 to an output device 1340. Output adapter 1342 is provided to illustrate that there are some output devices 1340 like monitors, speakers, and printers among other output devices 1340 that require special adapters. The output adapters 1342 include, by way of illustration and not limitation, video and sound cards that provide a means of connection between the output device 1340 and the system bus 1318. It should be noted that other devices and/or systems of devices provide both input and output capabilities such as remote computer(s) 1344.

Computer 1312 can operate in a networked environment using logical connections to one or more remote computers, such as remote computer(s) 1344. The remote computer(s) 1344 can be a personal computer, a server, a router, a network PC, a workstation, a microprocessor based appliance, a peer device or other common network node and the like, and typically includes many or all of the elements described relative to computer 1312. For purposes of brevity, only a memory storage device 1346 is illustrated with remote computer(s) 1344. Remote computer(s) 1344 is logically connected to computer 1312 through a network interface 1348 and then physically connected via communication connection 1350. Network interface 1348 encompasses communication networks such as local-area networks (LAN) and wide-area networks (WAN). LAN technologies include Fiber Distributed Data Interface (FDDI). Copper Distributed Data Interface (CDDI). Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1350 refers to the hardware/software employed to connect the network interface 1348 to the bus 1318. While communication connection 1350 is shown for illustrative clarity inside computer 1312, it can also be external to computer 1312. The hardware/software necessary for connection to the network interface 1348 includes, for exemplary purposes only, internal and external technologies such as, modems including regular telephone grade modems, cable modems and DSL modems, ISDN adapters, and Ethernet cards.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A database change notification system, comprising:
a service broker to receive database query registration information;
one or more queues to store at least a portion of the database query registration information; and
one or more notification delivery services to transmit change messages.

2. The system of claim 1, employed in an SQL environment.

3. The system of claim 1, the service broker residing in one of a client and server.

4. The system of claim 1, the database registration information comprising at least one of a unique identifier, a delivery address, a queue name, a time-out period, a communication option, a protocol, a port, authentication information, a security option, and encryption information.

5. The system of claim 1, the one or more queues located in the service broker.

6. The system of claim 1, the service broker being a database.

7. The system of claim 1, the at least a portion of the database query registration information stored in the one or more queues comprising a unique identifier and a delivery address.

8. The system of claim 1, the notification delivery service activated by one of the service broker, system startup, a detection mechanism and a user.

9. The system of claim 4, the time-out period employed to determine a query registration expiration period.

10. The system of claim 4, the queue selected to store the at least a portion of the database query registration information based on one of a default, the database query registration information, probability, statistics, neural networks and adaptive techniques.

11. The system of claim 4, the delivery address employed to determine the change message destination.

12. The system of claim 4, the unique identifier employed to deliver a database change notification to an associated client component(s).

13. The system of claim 12, the database change notification comprising at least one of an event and a flag to raise an event.

14. The system of claim 1, the change message including a unique identifier

15. The system of claim 4, the database query registration information associated with raw, transformed and queryable results.

16. The system of claim 1, the one or more queues storing database query registration information associated with one or more queries from one or more components located at one or more destinations.

17. The system of claim 1, the one or more queues utilized for homogeneous storage *via* one of storing database query registration information for registered queries that return similar results in a similar queue and storing database query registration information for registered queries associated with similar components or destinations in a similar queue.

18. The system of claim 1, the one or more notification delivery services accessing a similar queue.

19. The system of claim 1, at least one notification delivery service accessing one or more queues with database query registration information from a plurality of clients, wherein the at least one notification delivery service can route change messages to the plurality of clients.

20. A database query registration and message delivery system, comprising:
a server to receive a database query registration message and a database change request;
a service broker to facilitate database query registration information utilization;
a queue to store at least a portion of the database query registration information; and
a notification delivery service operative to the service broker, and able to access the at least a portion of the database query registration information stored in the queue to construct a change message.

21. The system of claim 20, the server being an SQL based server.

22. The system of claim 21, the one or more database query registration messages comprising a markup language based file.

23. The system of claim 20, the database query registration information comprising at least a unique identifier and a delivery address.

24. The system of claim 20, the database query registration information comprising one or more of a queue name, a time-out period, authentication information, encryption options, a length of time for a delivery service to remain active, an option of whether to retain or remove the registration once a change has occurred, and an option of whether to deliver the message synchronously or asynchronously to the change.

25. The system of claim 20, further comprising a database change detection mechanism.

26. The system of claim 20, the queue determined by one of employing a queue name extracted from the database query registration information, a default queue name, a user defined queue name and an optimally selected queue name.

27. The system of claim 20, further comprising an intermediate component to store the at least a portion of the database query registration information from the queue, and subsequently providing the at least a portion of the database query registration information to the notification delivery service.

28. The system of claim 27, the intermediate component comprising a log file and a buffer.

29. The system of claim 20, further comprising a storage for query results external from the server.

30. The system of claim 29, the external storage comprising cache.

31. The system of claim 20, further comprising a plurality of notification delivery services that can be associated with one or more registered database and can access one or more queues.

32. The system of claim 20 the notification delivery service transmitting the change message in at least one of prior to committing the database change request and concurrently with committing the database change request and subsequent to committing the database change request, wherein the transmission technique selected is based on one of a default, the database query registration information, and usage information.

33. The system of claim 20, the notification delivery service active for period of time based on an absolute length of time, a number of queue entries to service and a period of inactivity.

34. The system of claim 33, the period of time based on one of default, the database query registration information, server load, and adaptive techniques.

35. A database query registration and notification system, comprising:
a registration component to facilitate registration of a database query by providing database query registration information; and
a notification runtime service to receive one or more change messages and to facilitate routing a database change notification.

36. The system of claim 35, the registration components utilizing the database query registration information to construct an XML based message.

37. The system of claim 35, the notification runtime service extracting a unique identifier from the change message and utilizing the unique identifier to deliver the database change notification to an associated component(s).

38. The system of claim 35, the one or more database change notifications comprising at least one of an event and a flag to signal a change has occurred.

39. A database query registration, change messaging and notification system, comprising:
a dependency component to facilitate registering a database query;
a service broker to convey database query registration information;
a queue to store a portion of the database query registration information; and
a notification delivery service to provide a change message when a database change would affect the results of a subsequent query.

40. The system of claim 39, the dependency component further providing a registration identifier comprising a globally unique identifier (GUID) associated with at least one registered query, wherein associated invalidations result in a substantially similar client action(s).

41. The system of claim 39, further including a notification runtime service to provide a delivery address to the dependency component.

42. The system of claim 41, further including a universal listener to provide a delivery address to the dependency component.

43. The system of claim 39, the database query registration information comprising a queue name, a delivery address, a time-out period and a unique identifier.

44. The system of claim 42, selecting one of the universal listener and the notification runtime service based in part on a default, client capabilities, database query registration information, configuration, statistics, and adaptive technologies.

45. The system of claim 41, the notification runtime service operatively coupled to the notification delivery service through a communications protocol.

46. The system of claim 42, the universal listener operatively coupled to the notification delivery service through a communications protocol.

47. The system of claim 39, further comprising employing authentication certificates to provide secure message transmission.

48. The system of claim 41, further comprising a dependency switch to facilitate registration of the dependency component with the notification runtime service;

49. The system of claim 42, further comprising a dependency listener to facilitate registration of the dependency component with the universal listener.

50. The system of claim 48, the dependency component starting the dependency switch to register with the notification runtime service if the dependency switch is not active and a request to register a database query is received.

51. The system of claim 39, employing techniques comprising an asynchronous and a synchronous database change commitment and database change message delivery to improve one of scalability and data consistency.

52. A method to receive a notification when a database changes, comprising:
providing database query registration information to a server:
storing at least a portion of the database query registration information in a queue; and
utilizing the at least a portion of the database query registration information to construct and transmit a change message.

53. The method of claim 52, the database query registration information comprising a queue name, a delivery address, a time-out period and a unique identifier.

54. The method of claim 52, further comprising detecting a database change that will change the results of a registered query.

55. The method of claim 52, further comprising employing a service broker to facilitate storing database query registration information in the queue and activating a notification delivery component to process the message from the queue.

56. The method of claim 52, further comprising employing a notification delivery service, wherein the notification delivery service utilizes at least a portion of the database query registration information in a change message, and utilizes at least a portion of the database query registration information to deliver the change message.

57. A data packet transmitted between two or more computer components that facilitate database query registration, database change detection and database change notification comprising:
database query registration information, associated with a registered database query, stored in a queue, and employed to construct and transmit a change message utilized to route a database change notification.

58. A computer readable medium storing computer executable components of a database query registration, detection and notification system, comprising:
a queue to store database query registration information;
a notification delivery service to transmit a change message that is utilized to notify a client registered to receive notification; and
a service broker operatively coupled to the queue and the notification delivery service to provide the queue with database query registration information and activate the notification delivery service.

59. A system for registering a database query, comprising:
a means to register a database query;
a means to detect a database change that changes the results of a registered query; and
a means to provide a change message indicating the results of the subsequent query may be different than the results from a previous query.
